# EUROPEAN PATENT APPLICATION

(11) **EP 3 862 954 A1**
(43) Date of publication of application: **11.08.2021**
(21) Application number: 21153698.2
(22) Date of filing: 27.01.2021
(51) Int. Cl.: G06Q 20/20, G07G 1/00, G07G 1/14

(54) **ARTICLE DISPLAY SYSTEM**

(30) Priority: 06.02.2020 JP 2020018869
(71) Applicant: Toshiba Tec Kabushiki Kaisha, Shinagawa-ku Tokyo 141-8562 (JP)
(72) Inventor: Okamura, Atsushi, Shinagawa-ku, Tokyo 141-8562 (JP)
(74) Representative: Bandpay & Greuter

(57) **Abstract**

An article display system includes display furniture on which articles can be displayed. A first sensor detects states of the articles on the display furniture and is fixed to the display furniture. A second sensor detects a moving body within a monitoring region. The second sensor is fixed to the display furniture. A storage device stores coordinate information representing a position of the display furniture and the monitoring region. A control device is configured to identify, based on detection results from the first and second sensors, an article having a state that has changed and the moving body that changed the state of the article. The coordinate information is represented by a coordinate system having an origin set at a corner of on the piece of display furniture.

## Description

### FIELD

Embodiments described herein relate generally to an article display system.

### BACKGROUND

There have been proposed various store systems that automatically register a commodity being purchased by a customer or consumer according to an action of the costumer in a store. Such automatic registration can make commodity registration processing at a checkout counter or the like unnecessary. As one of the store systems, there is a store system that identifies a commodity that has been taken from a shelf as being registered for purchase by a consumer detected or assumed to have taken the commodity from the shelf. It is possible to achieve an unmanned store by introducing the store system of this type in, for example, a convenience store or a small kiosk.

In the store system of this type, various sensors are used in order to appropriately specify the consumer as a purchaser. The positions of the sensors are determined by the position of a merchandise display shelf or the like. In the past, a floor of a store is conceptualized as a planar coordinate system. Disposition places of a shelf, sensors, and the like can be illustrated on the coordinate plane. Accordingly, if it is attempted to change a layout of a shelf in the store, it is necessary to change information indicating the dispositions of the shelf, the sensors, and the like according to the change of the layout. Thus, it is generally not simple or easy to change the layout.

### DESCRIPTION OF THE DRAWINGS

FIG. 1 is a front schematic view of a shelf used in a store system according to an embodiment.
FIG. 2 is a top schematic view of the shelf.
FIG. 3 is a block diagram illustrating a schematic configuration of a store system.
FIG. 4 is a schematic example of data structure of a commodity data file.
FIG. 5 is a schematic example of data structure of a tracking file.
FIG. 6 is a schematic example of data structure of a correlation table.
FIG. 7 is a schematic example of data structure of a purchase list.
FIG. 8 is a schematic diagram example of data structure of a setting data file.
FIG. 9 is an explanatory diagram of a three-dimensional coordinate system based on a shelf.
FIG. 10 is a schematic diagram illustrating a positional relation between a layout of a shelf before a change and a layout of the shelf after the change.

### DETAILED DESCRIPTION

Certain embodiments provide an article display system that can permit changes in a layout of display furniture, such as a shelf, in a store to be made more conveniently.

According to an embodiment, an article display system, includes a piece of display furniture on which articles can be displayed. A first sensor is configured to detect states of the articles displayed on the display furniture. The first sensor is fixed to the piece of display furniture. A second sensor is configured to detect a moving body within a monitoring region of the piece of display furniture. The second sensor is fixed to the piece display furniture. A storage device is configured to store coordinate information representing a position of the piece of display furniture and the monitoring region. A control device is configured to identify, based on detection results from the first and second sensors, an article having a state that has changed and the moving body corresponding to the article having the state that has changed. The coordinate information is represented by a coordinate system having an origin set at a corner of the piece of display furniture.

Preferably, the second sensor comprises a tracking sensor for tracking the moving body in the monitoring region.

Preferably, the second sensor comprises an action monitoring sensor for monitoring actions of the moving body.

Preferably, the article display system further comprises a third sensor for detecting identification information of the moving body, the third sensor being fixed to the piece of display furniture.

Preferably, the storing unit stores coordinate information representing a detection region of the third sensor.

Preferably, the third sensor is a barcode scanner.

Preferably, the article is a commodity for sale.

Preferably, the moving body is a consumer.

Preferably, the coordinate system is fixed to the piece of the display furniture.

Preferably, the origin of the coordinate system is fixed to a point on the piece of the display furniture, and each axis of the coordinate system is fixed relative to the piece of the display furniture.

Preferably, the piece of display furniture is a display shelf.

Preferably, the second sensor comprises a camera.

In an embodiment, the article display system is configured as a smart shelf of a retail store, the piece of display furniture being configured as a shelf structure holding a plurality of shelves. The first sensor is configured to detect whether an item is removed from a shelf in the plurality of shelves, the first sensor having a sensing orientation fixed relative to the shelf structure. The second sensor is configured to detect movement of a person within the monitoring region, the second sensor having a sensing orientation fixed relative to the shelf structure. The storage device is configured to store coordinate information representing the monitoring region of the second sensor and a sensing region of the first sensor. The controller is configured to identify the item removed from the shelf changed and the person removing the item based on sensing results from the first and second sensors.

Preferably, the origin of the coordinate system is fixed to a lowermost corner of the shelf structure and each axis of the coordinate system is fixed relative to the shelf structure.

In general, in the following examples, the described coordinate information is based on a coordinate system having an origin and coordinate axes set based on the display furniture itself. That is, the coordinate system is fixed to display furniture and thus reorients relative to a store floor coordinate system or any sort of global coordinate system whenever the display furniture is moved or reoriented.

An article display system according to an embodiment is explained below with reference to the drawings.

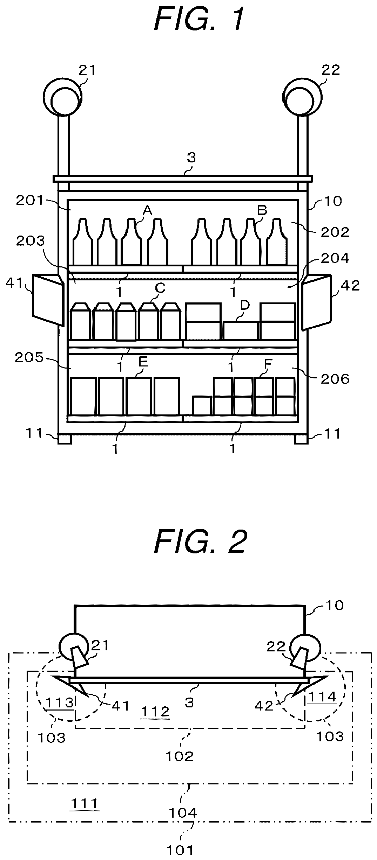

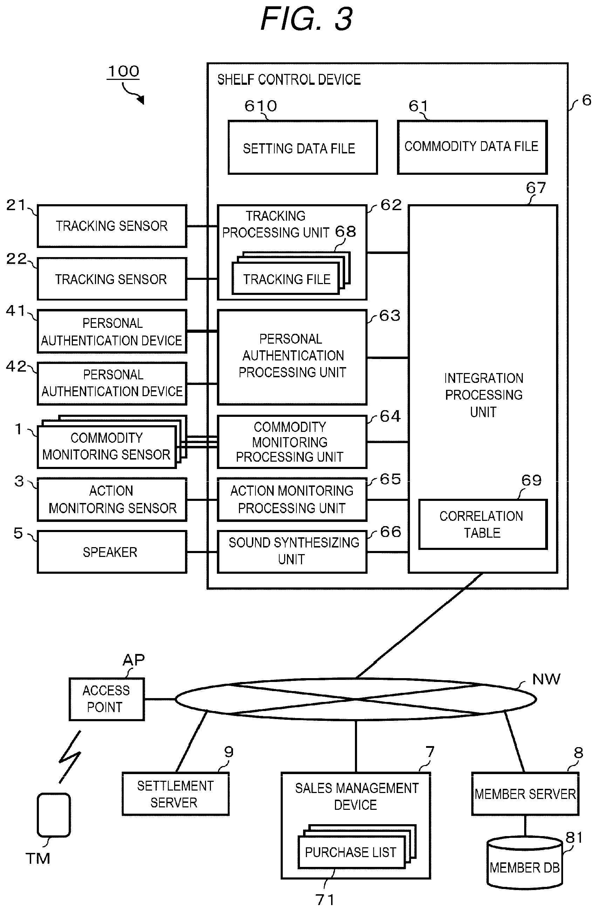

In this embodiment, a store system 100 (see FIG. 3) that automatically registers a commodity purchased by a consumer using a technique of identifying a consumer near a shelf 10 when a commodity is taken from the shelf 10 (see FIGS. 1 and 2) as a purchaser of the commodity taken from the shelf. Such a store system 100 is a form of the article display system.

First, the shelf 10 used in the store system 100 is explained with reference to FIGS. 1 and 2.

FIG. 1 is a front schematic view of the shelf 10. FIG. 2 is a top schematic view of the shelf 10. As illustrated in FIG. 1, the shelf 10 is a three-stage shelf partitioned by two shelf plates in the up-down direction. Two different kinds of commodities are displayed on each of the stages. As an example, commodities A and commodities B are displayed side by side on an upper stage. Commodities C and commodities D are displayed side by side on a middle stage. Commodities E and commodities F are displayed side by side on a lower stage.

In the following explanation, a section on the upper stage left side where the commodities A are displayed is referred to as a section 201. A section on the upper stage right side where the commodities B are displayed is referred to as a section 202. A section on the middle stage left side where the commodities C are displayed is referred to as a section 203. A section on the middle stage right side where the commodities D are displayed is referred to as a section 204. A section on the lower stage left side where the commodities E are displayed is referred to as a section 205. A section on the lower stage right side where the commodities F are displayed is referred to as a section 206.

Commodity monitoring sensors 1 are respectively attached to the sections 201 to 206 in the stages. The commodity monitoring sensors 1 are sensors for monitoring an increase or a decrease in weight involved in movement of a commodity. In this embodiment, weight sensors capable of measuring total weights of commodities displayed in the sections 201 to 206 corresponding to the weight sensors are used as the commodity monitoring sensors 1.

As illustrated in FIG. 1, a plurality of casters 11 are attached to the bottom of the shelf 10. The shelf 10 can freely move on a floor surface with the action of the casters 11.

As illustrated in FIGS. 1 and 2, two tracking sensors 21 and 22 and one action monitoring sensor 3 are attached above the shelf 10. The tracking sensors 21 and 22 are separately attached to the left side and the right side of the shelf 10. The action monitoring sensor 3 is attached substantially in parallel to the floor surface along the width direction of the shelf 10 on the front side of the shelf 10.

The tracking sensors 21 and 22 are sensors for tracking a traffic line of a consumer present in a rectangular region 111 surrounded by a first boundary line 101 represented by an alternate long and two short dashes line in FIG. 2. In the following explanation, the region 111 is referred to as tracking region 111. In this embodiment, a camera sensor such as an RGB camera, an IR camera, or an infrared camera capable of photographing the inside of the tracking region 111 is used as the tracking sensors 21 and 22. The number of the tracking sensors 21 and 22 is not limited to two.

The action monitoring sensor 3 is a sensor for monitoring an action on the shelf 10 by a consumer present in a rectangular region 112 surrounded by a second boundary line 102 represented by a broken line in FIG. 2. Specifically, the action monitoring sensor 3 monitors an action of the consumer present in the region 112 stretching a hand to the shelf 10 and an action of retracting the hand. In the following explanation, the action of stretching a hand is referred to as hand stretching action and the action of retracting the hand is referred to as hand returning action. The region 112 is a region where the consumer is assumed to be located when taking out commodities A to F from the shelf 10. In the following explanation, the region 112 is referred to as purchase region 112. The purchase region 112 is inside the tracking region 111. In this embodiment, a TOF (Time of Flight) sensor, a laser radar, or the like is used as the action monitoring sensor 3. The number of action monitoring sensors 3 is not limited to one.

As illustrated in FIGS. 1 and 2, personal authentication devices 41 and 42 are attached to both sides of the shelf 10. The personal authentication devices 41 and 42 are devices for performing personal authentication of a consumer. A consumer using a store performs member registration in advance. The member registration is enabled by installing a dedicated application program in a user terminal TM (see FIG. 3) such as a smartphone or a tablet terminal. By performing the member registration, a member ID (which is identification information specific to the consumer) is set in the user terminal TM. In the following explanation, this application program is referred to as shopping application. If the shopping application is started in the user terminal TM for which the member ID has been set, a code representing the member ID is displayed on a display of the user terminal TM. The code is, for example, a barcode or a two-dimensional code. The personal authentication devices 41 and 42 include readers for reading the code representing the member ID. The number of the personal authentication devices 41 and 42 is not limited to two. Positions for the personal authentication devices 41 and 42 are not limited to both the sides of the shelf 10.

In FIG. 2, circular regions 113 and 114 surrounded by third boundary lines 103 represented as lines drawn with broken lines are regions where the consumer is assumed to enter in order to cause readers of the personal authentication devices 41 and 42 to read the code of the member ID displayed on the display of the user terminal TM. In the following explanation, the regions 113 and 114 are referred to as authentication regions 113 and 114. The authentication regions 113 and 114 are present inside the tracking region 111.

A fourth boundary line 104 is set between the first boundary line 101 and the second boundary line 102. In FIG. 2, the fourth boundary line 104 represented by an alternate long and short dash line. The store system 100 starts tracking if a consumer enters the tracking region 111. If the consumer enters crosses the fourth boundary line 104 from outside of the fourth boundary line 104, the store system 100 sets a tracking ID in the consumer. If the consumer moves from the inside to outside of the fourth boundary line 104 and further exits to the outside of the first boundary line 101, the store system 100 ends the tracking of the consumer.

The first to fourth boundary lines 101 to 104 may not have a linear shape and may have a belt shape having predetermined width. The tracking region 111 and the purchase region 112 may be regions having a shape other than the rectangular shape. The authentication regions 113 and 114 may be regions having a shape other than the circular shape.

The shelf 10 is an example of display furniture for displaying articles. The number of individual shelves of the shelf 10 is not particularly limited. Commodities are an example of the articles displayed on the display furniture. The display furniture is not limited to the shelf 10. For example, a display rack, a merchandise showcase, a display case, a display cart, a wagon, a display table, a display counter, or the like may be an example of the display furniture.

The configuration of the store system 100 is explained with reference to FIGS. 3 to 9.

FIG. 3 is a block diagram illustrating aspects of the store system 100. The store system 100 includes a shelf control device 6, a sales management device 7, a member server 8, and a settlement server 9. The store system 100 connects the shelf control device 6, the sales management device 7, the member server 8, and the settlement server 9 to one another with a communication network NW such as a LAN (Local Area Network).

The store system 100 is capable of performing wireless communication with the user terminal TM via an access point AP of the communication network NW. The user terminal TM is a terminal carried by a consumer. For example, a smartphone and a tablet terminal can be the user terminal TM.

The member server 8 manages a member database 81 for saving information relating to a consumer who performs member registration. In the member database 81, names of consumers, terminal information of user terminals TM carried by the consumers, information relating to settlement registered by the consumers, validity flags, and the like are correlated with member IDs of the consumers and saved. The terminal information includes information such as a communication address necessary for performing communication with the user terminals TM via the communication network NW. The information relating to settlement includes information necessary for card settlement performed using a credit card, an electronic money card, or the like or electronic settlement performed using a barcode, a two-dimensional cord, or the like. A validity flag is one-bit data for identifying whether a member ID is valid. In this embodiment, the validity flag of a valid member ID is represented as "1" and the validity flag of an invalidated member ID is represented as "0". For example, a validity flag correlated with a member ID of a consumer who loses membership is "0".

The settlement server 9 is a server for performing settlement processing such as the card settlement and the electronic settlement described above. A POS (Point Of Sales) terminal may be connected to the settlement server 9. The settlement server 9 may perform the settlement processing via the POS terminal. Well-known processing can be directly applied as the settlement processing. Therefore, specific explanation of the settlement processing is omitted.

The shelf control device 6 includes a commodity data file 61.

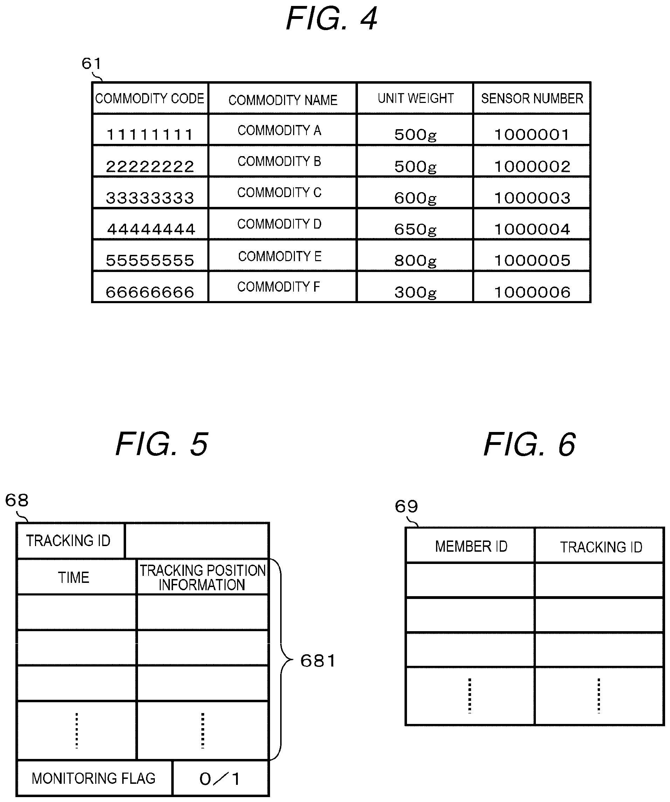

The commodity data file 61 stores data relating to the commodities A to F displayed on the shelf 10. An example of data structure of the commodity data file 61 is illustrated in FIG. 4. As illustrated in FIG. 4, a commodity name, a unit weight, and a sensor number are correlated with respective commodity codes of the commodities A to F and stored in the commodity data file 61. The unit weight is weight per one item of the commodity. The sensor number is a number for identifying the commodity monitoring sensors 1 provided in each of the sections 201 to 206 of the shelf 10 on which the commodity is displayed. Specific sensor numbers are respectively allocated to the commodity monitoring sensors 1. Data stored in the commodity data file 61 is not limited to the items described above. Data of other items may be stored in the commodity data file 61.

The shelf control device 6 has functions of a tracking processing unit 62, a personal authentication processing unit 63, a commodity monitoring processing unit 64, an action monitoring processing unit 65, a sound synthesizing unit 66, and an integration processing unit 67.

The tracking processing unit 62 captures image data from the tracking sensors 21 and 22. The tracking processing unit 62 analyzes the image data and tracks a traffic line of a consumer present in the tracking region 111. The tracking processing unit 62 stores traffic line data in a tracking file 68 for each of consumers.

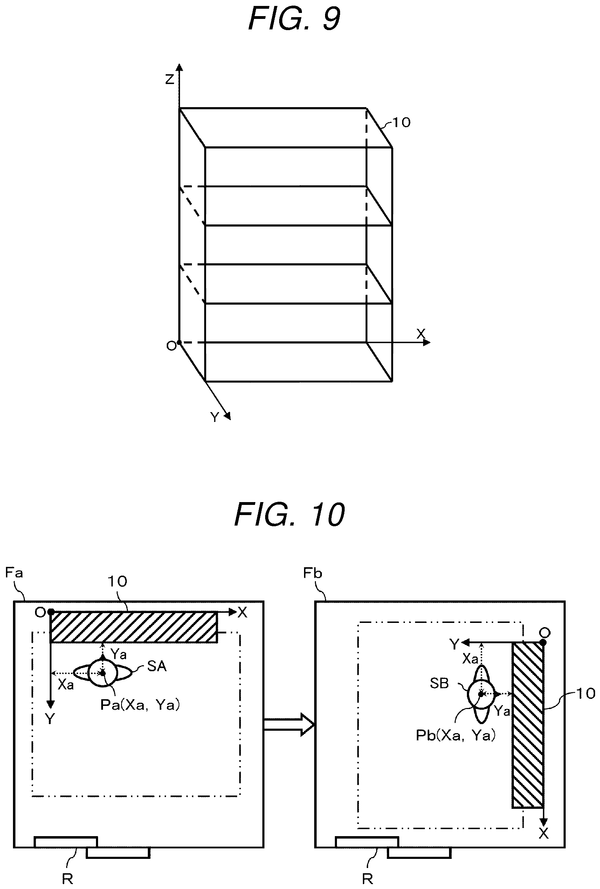

An example of data structure of the tracking file 68 is illustrated in FIG. 5. As illustrated in FIG. 5, the tracking file 68 includes an area of a tracking ID, an area for traffic line data 681, and an area of a monitoring flag. The tracking ID is a unique code set by the tracking processing unit 62 in order to identify a consumer tracking target (a consumer being tracked). The traffic line data 681 is data in which tracking position information indicating a place where the tracking target consumer was present and at a point in time are presented in time series. The tracking position information is represented by an X-Y plane coordinate based on an origin O of a three-dimensional coordinate system explained with reference to FIG. 9 below. The monitoring flag is one-bit data for identifying whether the tracking target consumer moved into region surrounded by the fourth boundary line 104 from outside of the region surround by the fourth boundary line 104. In this embodiment, the monitoring flag stored in the tracking file 68 of a consumer who moves into region surrounded by the fourth boundary line 104 from outside of the region surround by the fourth boundary line 104is represented as "1". The monitoring flag stored in the other tracking files 68 is represented as "0".

The personal authentication processing unit 63 captures data read by the readers of the personal authentication devices 41 and 42 and performs processing relating to personal authentication of a consumer. The personal authentication processing unit 63 performs the processing relating to personal authentication in cooperation with the integration processing unit 67. The personal authentication processing unit 63 outputs an authentication result to the personal authentication devices 41 and 42. The personal authentication devices 41 and 42 have a function of informing an authentication result. For example, the personal authentication devices 41 and 42 include display devices and display the authentication result on the display devices.

The commodity monitoring processing unit 64 captures weight data from the commodity monitoring sensor 1. The commodity monitoring processing unit 64 monitors, based on the weight data, states of the commodities A to F displayed on the shelf 10. Specifically, if the weight data captured from the commodity monitoring sensor 1 decreases, the commodity monitoring processing unit 64 recognizes that a commodity is taken out from a section where the commodity monitoring sensor 1 is provided. If the weight data from the commodity monitoring sensor 1 increases, the commodity monitoring processing unit 64 recognizes that a commodity is placed in a section where the commodity monitoring sensor 1 is provided. A recognition result in the commodity monitoring processing unit 64 is given to the integration processing unit 67.

The action monitoring processing unit 65 captures an output signal from the action monitoring sensor 3. The action monitoring processing unit 65 monitors, based on the output signal, an action on the shelf 10 by a purchaser present in the purchase region 112. Specifically, if a hand of a consumer inserted into the shelf 10 is detected by the action monitoring sensor 3, the action monitoring processing unit 65 recognizes the action as a hand stretching action. If the hand is not detected, the action monitoring processing unit 65 recognizes the action as a hand returning action. A recognition result in the action monitoring processing unit 65 is given to the integration processing unit 67. Action position information of a point where the action monitoring sensor 3 detects the hand is also given to the integration processing unit 67. The action position information is represented by an X-Z plane coordinate based on the origin O of the three-dimensional coordinate system explained with reference to FIG. 9 below.

A speaker 5 is connected to the sound synthesizing unit 66. The sound synthesizing unit 66 synthesizes sound data according to control by the integration processing unit 67 and outputs the sound data to the speaker 5. Consequently, sound is emitted from the speaker 5. The speaker 5 is set near the shelf 10. The speaker 5 may be set in, for example, a store clerk standby place. Alternatively, the speaker 5 may be incorporated in a terminal carried by a store clerk. The sound synthesized by the sound synthesizing unit 66 may be emitted from the speaker 5. In that case, the sound data synthesized by the sound synthesizing unit 66 is transmitted to the access point AP via the communication network NW and further transmitted to the portable terminal of the store clerk via wireless communication.

The integration processing unit 67 performs data processing necessary for the store system 100 in cooperation with the tracking processing unit 62, the personal authentication processing unit 63, the commodity monitoring processing unit 64, the action monitoring processing unit 65, and the sound synthesizing unit 66. As one of the data processing, there is processing for correlating a consumer for whom authentication is successful in the personal authentication processing unit 63 and a consumer whose traffic line is tracked by the tracking processing unit 62. The integration processing unit 67 includes a correlation table 69 as a data table used in this processing.

An example of data structure of the correlation table 69 is illustrated in FIG. 6. As illustrated in FIG. 6, the correlation table 69 includes a region for correlating and storing a member ID of a consumer and a tracking ID set for the consumer.

As one of the data processing executed by the integration processing unit 67, there is processing for specifying an action on a commodity by a consumer based on a tracking result of the tracking processing unit 62 and a monitoring result of the action monitoring processing unit 65. The integration processing unit 67 outputs, based on the action of the consumer specified by this processing, a purchase notification command or a commodity return notification command to the purchase management device 7.

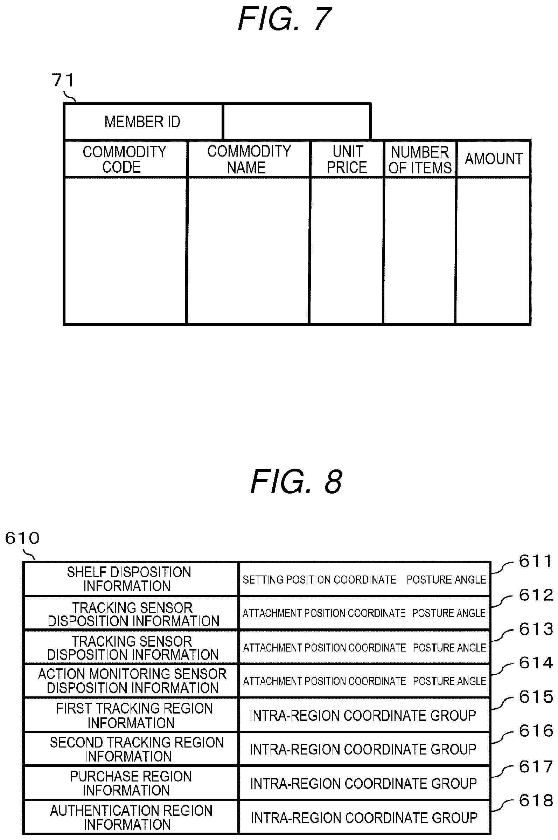

The purchase management device 7 includes a purchase list 71. The purchase list 71 is created for each of consumers. An example of data structure of the purchase list 71 is illustrated in FIG. 7. As illustrated in FIG. 7, the purchase list 71 correlates purchased commodity data of a consumer with a member ID of the consumer and stores the purchased commodity data. The purchased commodity data includes items such as a commodity code, a commodity name, a unit price, the number of pieces, and an amount. The amount is calculated by multiplying together the unit price and the number of pieces. The purchased commodity data may include items other than the items described above.

If receiving the purchase notification command from the shelf control device 6, the purchase management device 7 registers the purchased commodity data in the purchase list 71. If receiving the commodity return notification command from the shelf control device 6, the sales management device 7 cancels purchased commodity data corresponding to the commodity return notification command.

The shelf control device 6 includes a setting data file 610.

FIG. 8 is a schematic diagram illustrating data structure of the setting data file 610. As illustrated in FIG. 8, the setting data file 610 includes a memory area 611 for shelf disposition information, memory areas 612 and 613 for two tracking sensors disposition information, a memory area 614 for action monitoring sensor disposition information, a memory area 615 for first tracking region information, a memory area 616 for second tracking region information, a memory area 617 for purchase region information, and a memory area 618 for authentication region information.

In the memory area 611, a setting position coordinate of the shelf 10 and a posture angle of the shelf 10 are stored. In the memory area 612, attachment position information of one tracking sensor 21 and a posture angle of the tracking sensor 21 are stored. In the memory area 613, attachment position information of the other tracking sensor 22 and a posture angle of the tracking sensor 22 are stored. In the memory area 614, attachment position information of the action monitoring sensor 3 and a posture angle of the action monitoring sensor 3 are stored.

In the memory area 615, a coordinate group of the tracking region 111 that is outside the fourth boundary line 104 but inside the first boundary line 101 is stored. In the memory area 616, a coordinate group within the tracking region 111 inside the fourth boundary line 104 but outside the purchase region 112, is stored. In the memory area 617, a coordinate group the purchase region 112 is stored. In the memory area 618, a coordinate group included in the authentication regions 114 is stored.

In this embodiment, information concerning coordinates and posture angles stored in the memory areas 611 to 618 of the setting data file 610 is indicated by a three-dimensional coordinate system having an origin and coordinate axes decided based on the shelf 10. FIG. 9 is a schematic diagram illustrating an example of the three-dimensional coordinate system including the origin and the coordinate axes decided based on the shelf 10. As illustrated in FIG. 9, the three-dimensional coordinate system is a coordinate system in which a left inner lower part of a circumscribed rectangular parallelepiped surrounding the shelf 10 is set as an origin O [(X, Y, Z)=(0, 0, 0)], a width direction of the shelf 10 is set as an X axis, a depth direction of the shelf 10 is set as a Y axis, and a height direction of the shelf 10 is set as a Z axis.

Therefore, the setting position coordinate stored in the memory area 611 as shelf disposition information is a coordinate of the origin O of the three-dimensional coordinate system. The posture angles are 0 degree because the width direction, the depth direction, and the height direction of the shelf 10 are respectively the X axis, the Y axis, and the Z axis of the three-dimensional coordinate system. The attachment position coordinate stored in the memory area 612 as tracking sensor disposition information is a coordinate of the three-dimensional coordinate system equivalent to a sensitivity center point of the tracking sensor 21. The posture angles are angles of a sensitivity axis indicating a sensitivity direction of the tracking sensor 21 with respect to the X axis, the Y axis, and the Z axis of the three-dimensional coordinate system. The attachment position coordinate stored in the memory area 613 as tracking sensor disposition information is a coordinate of the three-dimensional coordinate system equivalent to a sensitivity center point of the tracking sensor 22. The posture angles are angles of a sensitivity axis indicating a sensitivity direction of the tracking sensor 22 with respect to the X axis, the Y axis, and the Z axis of the three-dimensional coordinate system. The attachment position coordinate stored in the memory area 614 as action monitoring sensor disposition information is a coordinate of the three-dimensional coordinate system equivalent to a sensitivity center point of the action monitoring sensor 3. The posture angles are angles of a sensitivity axis indicating a sensitivity direction of the action monitoring sensor 3 with respect to the X axis, the Y axis, and the Z axis of the three-dimensional coordinate system.

The intra-region coordinate group stored in the memory area 615 as first tracking region information is an aggregate of coordinates included in a region outside the fourth boundary line 104 but still inside the tracking region 111 in the X-Y plane coordinate based on the origin O of the three-dimensional coordinate system. The intra-region coordinate group stored in the memory area 616 as second tracking region information is an aggregate of coordinates included in a region inside fourth boundary line 104 but outside the purchase region 112 in the X-Y plane coordinate based on the origin O of the three-dimensional coordinate system. The intra-region coordinate group stored in the memory area 617 as purchase region information is an aggregate of coordinates included in the purchase region 112 in the X-Y plane coordinate based on the origin O of the three-dimensional coordinate system. The intra-region coordinate group stored in the memory area 618 as authentication region information is an aggregate of coordinates included in the authentication region 114 in the X-Y plane coordinate based on the origin O of the three-dimensional coordinate system.

Operations of the store system 100 are explained. In the following explanation, for convenience of explanation, the intra-region coordinate group stored in the memory area 615 of the setting data file 610 is referred to as first intra-tracking region coordinate group. The intra-region coordinate group stored in the memory area 616 is referred to as second intra-tracking region coordinate group. The intra-region coordinate group stored in the memory area 617 is referred to as intra-purchase region coordinate group. The intra-region coordinate group stored in the memory area 618 is referred to as intra-authentication region coordinate group.

The tracking processing unit 62 waits for a person to cross the first boundary line 101 and thus enter the tracking region 111. Incidentally, as a person entering the tracking region 111, not only a consumer but also a store-related person such as a store clerk is possible. However, for convenience of explanation, the person is limited to the consumer. Therefore, in the following explanation, the person is referred to as consumer.

The tracking processing unit 62 specifies the position of the consumer according to image data captured from the tracking sensors 21 and 22. The position of the consumer is represented by an X-Y plane coordinate referenced to origin O of the three-dimensional coordinate system. The position of the consumer is tracked based on the tracking sensor disposition information stored in the memory area 612 and the memory area 612 of the setting data file 610. Alternatively, the position of the consumer is represented by an X-Y-Z three-dimensional space coordinate referenced to the origin O of the three-dimensional coordinate system. In the following explanation, the position of the consumer is a coordinate (Xa, Ya).

The tracking processing unit 62 confirms whether the coordinate (Xa, Ya) is included in the first intra-tracking region coordinate group. If the coordinate (Xa, Ya) is included in the first intra-tracking region coordinate group, the tracking processing unit 62 determines that the consumer enters the tracking region 111. The tracking processing unit 62 starts tracking of the consumer. In the following explanation, the consumer to be tracked is referred to as a consumer SA.

The tracking processing unit 62 waits for the consumer SA to enter the tracking region 111 inside the fourth boundary line 104 or to exit the tracking region 111. Specifically, the tracking processing unit 62 waits for the coordinate (Xa, Ya) to be not included in the first intra-tracking region coordinate group. If the coordinate (Xa, Ya) is not included in the first intra-tracking region coordinate group, the tracking processing unit 62 confirms whether the coordinate (Xa, Ya) is included in the second intra-tracking region coordinate group. If the coordinate (Xa, Ya) is not included in the second intra-tracking region coordinate group, the tracking processing unit 62 recognizes that the consumer SA exits the tracking region 111. The tracking processing unit 62 ends the tracking of the consumer SA.

If the coordinate (Xa, Ya) is included in the second intra-racking region coordinate group, the tracking processing unit 62 recognizes that the consumer SA enters portion of the tracking region 111 inside the fourth boundary line 104. The tracking processing unit 62 allocates a specific tracking ID to the consumer SA. The tracking processing unit 62 creates a tracking file 68 in which the tracking ID is described. At this time, the tracking processing unit 62 sets a monitoring flag to "0". In the following explanation, the tracking file 68 with the tracking ID of the consumer SA is referred to as a tracking file 680.

The tracking processing unit 62 acquires the coordinate (Xa, Ya) together with the present time. The tracking processing unit 62 stores, in the tracking file 680, traffic line data in which the coordinate (Xa, Ya), that is, tracking position information and the time are correlated. The tracking processing unit 62 repeatedly executes processing for storing the traffic line data in the tracking file 680 until the consumer SA exits to the tracking region 111 outside of the fourth boundary line 104. If the coordinate (Xa, Ya) is not included in the second intra-tracking region coordinate group and is included in the first intra-tracking region coordinate group, the tracking processing unit 62 recognizes that the consumer SA exits to the tracking region 111 outside the fourth boundary line 104. The tracking processing unit 62 changes the monitoring flag to "1". Thereafter, the tracking processing unit 62 confirms whether the consumer SA exits to the outside of the tracking region 111 entirely. If the coordinate (Xa, Ya) is not included in both of the first intra-tracking region coordinate group and the second intra-tracking region coordinate group, the tracking processing unit 62 recognizes that the consumer SA exits to the outside of the tracking region 111. The tracking processing unit 62 outputs an exit notification command to the integration processing unit 67. The exit notification command includes the tracking ID of the tracking file 680. The operation of the integration processing unit 67 to which the exit notification command is input is explained below. The tracking processing unit 62 ends the tracking of the consumer SA.

The personal authentication processing unit 63 waits for data for personal authentication to be read by the readers of the personal authentication device 41 or the personal authentication device 42.

The consumer SA needs to receive personal authentication as a member before purchasing commodities. Accordingly, the consumer SA starts a shopping application installed in the user terminal TM. If the shopping application is started, a code of a member ID is displayed on the display of the user terminal TM. Therefore, the consumer SA causes the reader of the personal authentication device 41 or 42 to read the code. Then, the personal authentication device 41 or 42 outputs data indicated by the code to the personal authentication processing unit 63. A device ID for identifying the personal authentication device 41 or 42 is added to the data.

If the data is input from the personal authentication device 41 or the personal authentication device 42, the personal authentication processing unit 63 determines whether the data is data representing the code of the member ID. If the data is the data representing the code of the member ID, the personal authentication processing unit 63 acquires a device ID and a member ID added to the data. The personal authentication processing unit 63 outputs an authentication notification command to the integration processing unit 67. The authentication notification command includes the device ID and the member ID.

The integration processing unit 67 acquires the device ID from the authentication notification command. The integration processing unit 67 selects the authentication region 113 or 114 specified from the device ID. For example, if the device ID is a device ID of the personal authentication device 41, the integration processing unit 67 selects the authentication region 113. For example, if the device ID is a device ID of the personal authentication device 42, the integration processing unit 67 selects the authentication region 114. As an example, the explanation of the operation of the integration processing unit 67 is continued assuming that the authentication region 113 is selected.

The integration processing unit 67 acquires the number of consumers present in the authentication region 113. Specifically, in cooperation with the tracking processing unit 62 the integration processing unit 67 searches for tracking files 68 that store traffic line data in which a coordinate of tracking position information corresponding to time when the authentication notification command is output is included in an intra-authentication region coordinate group. The number of relevant tracking files 68 is the number of consumers present in the authentication region 113.

The integration procession unit 67 confirms whether the number of consumers present in the authentication region 113 is one. If the number of consumers is one, that is, if only the consumer SA is present in the authentication region 113, the integration processing unit 67 acquires the member ID from the authentication notification command. The integration processing unit 67 transmits an authentication request command to the member server 8. The authentication request command includes the member ID of the consumer SA.

The member server 8 determines validity of the member ID. Specifically, the member server 8 searches through the member database 81 with the member ID included in the authentication request command. As a result, if a validity flag corresponding to the member ID is "1", the member server 8 determines that the member ID is valid. If the validity flag corresponding to the member ID is "0", the member server 8 determines that the member ID is invalid. The member server 8 returns a validity determination result of the member ID to the integration processing unit 67.

If the member server 8 determines that the member ID is valid, the integration processing unit 67 acquires a tracking ID from the tracking file 680 of the consumer SA present in the authentication region 113. That is, the integration processing unit 67 acquires a tracking ID from the tracking file 68 that stores the traffic line data in which the coordinate of the tracking position information corresponding to the time when the authentication notification command is output is included in the intra-authentication region coordinate group. The integration processing unit 67 correlates the tracking ID and the member ID and stores the tracking ID and the member ID in the correlation table 69.

The integration processing unit 67 instructs the sales management device 7 to create the purchase list 71. According to the instruction, the sales management device 7 creates the purchase list 71 identified by the member ID of the consumer SA. In the following explanation, the purchase list 71 with the member ID of the consumer SA is referred to as a purchase list 711.

The integration processing unit 67 outputs an acceptance response command to the personal authentication processing unit 63.

On the other hand, if no consumer is present in the authentication region 113 or if two or more consumers are present in the authentication region 113, the integration processing unit 67 outputs an error response command to the personal authentication processing unit 63. If the validity flag corresponding to the member ID is "0" and the consumer SA is determined as not being a valid member, the integration processing unit 67 outputs the error response command to the personal authentication processing unit 63.

The personal authentication processing unit 63, which outputs the authentication notification command, waits for a response command from the integration processing unit 67. If the acceptance response command is input to the personal authentication processing unit 63, the personal authentication processing unit 63 controls the personal authentication device 41 in the authentication region 113 to inform that the authentication is successful. According to the control, for example, a message "Succeeded in authentication. Please start shopping" is displayed, for example, on the display device of the personal authentication device 41.

On the other hand, if the error response command is input to the personal authentication processing unit 63, the personal authentication processing unit 63 controls the personal authentication device 41 in the authentication region 113 to inform that the authentication is unsuccessful. According to the control, for example, a message "Failed in authentication" is displayed on the display device of the personal authentication device 41.

In this way, if the consumer SA being tracked by the tracking processing unit 62 enters, for example, the authentication region 113 and causes the reader of the personal authentication device 41 to read the member ID, the integration processing unit 67 acquires the number of consumers present in the authentication region 113. If the number is one, the integration processing unit 67 determines validity of the member ID in cooperation with the member server 8. If the validity of the member ID is approved, the personal authentication processing unit 63 notifies success of the authentication via the personal authentication device 41. If the validity of the member ID is not approved, the personal authentication processing unit 63 informs the failure of the authentication via the personal authentication device 41.

If the number of consumers present in the authentication region 113 is not one, the integration processing unit 67 does not determine validity of the member ID. In this case as well, the personal authentication processing unit 63 informs the failure in the authentication via the personal authentication device 41.

For example, if only the consumer SA is present in the authentication region 113, a consumer who can cause the reader of the personal authentication device 41 to read a member ID is limited to the consumer SA. Therefore, the member ID read by the reader and the tracking ID allocated to the consumer SA can be correlated. On the other hand, if another consumer SB other than the consumer SA is present in the authentication region 113, a consumer who can cause the reader of the personal authentication device 41 to read a member ID is not limited to the consumer SA. The consumer SB can also cause the reader to read a member ID. Therefore, if the number of consumers present in the authentication region 113 is not one, the integration processing unit 67 does not determine validity of the member ID. As a result, the member ID and the tracking ID are not correlated by mistake.

The consumer SA, who succeeds in the personal authentication by the member ID, can purchase the commodities A to F displayed on the shelf 10. For example, if purchasing the commodity A displayed in the section 201 of the shelf 10, the consumer SA takes out the commodity A from the section 201. In the following explanation, such an action of the consumer SA is referred to as purchasing action. The commodity monitoring processing unit 64, the action monitoring processing unit 65, and the integration processing unit 67 operate in cooperation in response to the purchasing action. Consequently, the shelf control device 6 can register purchased commodity data of the consumer SA in the purchase list 71.

First, the operation of the commodity monitoring processing unit 64 is explained.

In the purchasing action, an act of a plurality of consumers simultaneously taking out commodities of the same item is a prohibited act. An act of one consumer taking out plurality of commodities of one item is allowed.

The commodity monitoring processing unit 64 waits for a weight change to be detected by the commodity monitoring sensor 1. If the consumer SA performs a purchasing act on the commodity A, the commodity monitoring sensor 1 in the section 201 detects a weight change in a decreasing direction.

If the commodity monitoring sensor 1 detects the weight change, the commodity monitoring processing unit 64 acquires a sensor number of the commodity monitoring sensor 1 that detects the weight change. In this case, the commodity monitoring processing unit 64 acquires a sensor number, for example, "001" of the commodity monitoring sensor 1 provided in the section 201.

The commodity monitoring processing unit 64 determines whether a weight change in a decreasing direction is detected by the commodity monitoring sensor 1 or a weight change in an increasing direction is detected by the commodity monitoring sensor 1. If the weight change in the decreasing direction is detected, the commodity monitoring processing unit 64 outputs a decrease notification command to the integration processing unit 67. If the weight change in the increasing direction is detected, the commodity monitoring processing unit 64 outputs an increase notification command to the integration processing unit 67. The decrease notification command or the increase notification command includes the sensor number and a weight change amount.

The action monitoring processing unit 65 waits for a hand of the consumer SA to be detected by the action monitoring sensor 3. If the consumer SA in the purchase region 112 stretches a hand to the shelf 10, the hand is detected by the action monitoring sensor 3. If the hand is detected, the action monitoring processing unit 65 acquires action position information of a point where the hand of the consumer SA is detected. The action monitoring processing unit 65 outputs a hand stretching notification command to the integration processing unit 67. The hand stretching notification command includes action position information. The action position information is indicated by an X-Z plane coordinate of the three-dimensional coordinate system.

The action monitoring processing unit 65 waits for the hand of the consumer SA to be not detected. If the action monitoring sensor 3 does not detect the hand of the consumer SA, the action monitoring processing unit 65 outputs a hand return notification command to the integration processing unit 67. The hand return notification command includes action position information.

In this way, if the consumer SA stretches the hand to the shelf 10 in order to take out the commodity A from the section 201, first, the hand of the consumer SA is detected by the action monitoring sensor 3. According to the detection of the hand, the action monitoring processing unit 65 outputs a hand stretching notification command to the integration processing unit 67. The hand stretching notification command includes action position information indicating a position where the hand of the consumer SA is detected.

Subsequently, if the consumer SA lifts only one item of the commodity A from the section 201, a weight change in a decreasing direction is detected by the commodity monitoring sensor 1 in the section 201. According to the weight change, the commodity monitoring processing unit 64 outputs a decrease notification command to the integration processing unit 67. The decrease notification command includes a sensor number of the commodity monitoring sensor 1, which detects the weight change, and a weight change amount of the weight change. The weight change amount coincides with a unit weight of the commodity A. Incidentally, if the consumer SA collectively lifts two items of the commodity A from the section 201, the weight change amount coincides with a double of the unit weight of the commodity A.

Thereafter, if the consumer SA retracts, from the shelf 10, the hand holding the commodity A, the hand of the consumer SA detected by the action monitoring sensor 3 is not detected. Since the hand is not detected, the action monitoring processing unit 65 outputs a hand return notification command to the integration processing unit 67. The hand return notification command also includes action position information indicating a position where the hand of the consumer SA is detected.

In this way, in response to the purchasing act of the consumer SA, first, the action monitoring processing unit 65 outputs a hand stretching notification command to the integration processing unit 67. Subsequently, the commodity monitoring processing unit 64 outputs the decrease notification command to the integration processing unit 67. Thereafter, the action monitoring processing unit 65 outputs the hand return notification command to the integration processing unit 67.

If the hand stretching notification command is input from the action monitoring processing unit 65, the integration processing unit 67 acquires action position information from the hand stretching notification command. Subsequently, if the decrease notification command is input from the commodity monitoring processing unit 64, the integration processing unit 67 waits for the hand return notification command to be input. If the hand return notification command is input from the action monitoring processing unit 65, the integration processing unit 67 starts purchase processing.

That is, the integration processing unit 67 counts the number M of consumers present in the purchase region 112. Specifically, the integration processing unit 67 counts the number of tracking files 68 in which a coordinate, which is tracking position information, of traffic line data corresponding to the present time is included in the intra-purchase region coordinate group among the tracking files 68 stored in the tracking processing unit 62. The number of relevant tracking files 68 is the number M of consumers present in the purchase region 112.

If the number M is zero, it is likely that a consumer who cannot be tracked by the tracking processing unit 62 takes out a commodity from the shelf 10. In this case, the integration processing unit 67 outputs sound data of a tracking error to the sound synthesizing unit 66. Consequently, the sound synthesizing unit 66 synthesizes sound indicating the tracking error. Sound such as "since an error has occurred, you cannot do shopping" is output from the speaker 5. Accordingly, the integration processing unit 67 ends the purchase processing.

If the number is one, that is, if there is only one tracking file 68 in which the coordinate included in the intra-purchase region coordinate group is the traffic line data, the integration processing unit 67 acquires tracking position information of traffic line data corresponding to the present time from the tracking file 68. The integration processing unit 67 confirms, based on the tracking position information and the action position information acquired from the hand stretching notification command, whether a purchasing action by the consumer SA is possible. Specifically, the integration processing unit 67 confirms whether an action of the consumer SA present in a place specified by the tracking position information stretching a hand and taking out a commodity from a place specified by the action position information is possible.

If the purchasing action is possible, the integration processing unit 67 acquires a tracking ID from the tracking file 680. The integration processing unit 67 searches through the correlation table 69 and confirms whether the tracking ID is correlated with a member ID. If the tracking ID is correlated with the member ID, the integration processing unit 67 acquires the member ID correlated with the tracking ID.

The integration processing unit 67 acquires a sensor number from the decrease notification command. The integration processing unit 67 reads, from the commodity data file 61, commodity data such as a commodity code, a commodity name, and a unit weight stored together with the sensor number. Subsequently, the integration processing unit 67 calculates the number of purchased pieces. Specifically, the integration processing unit 67 acquires a weight change amount from the decrease notification command. The integration processing unit 67 divides the weight change amount by the unit weight. As a result, the integration processing unit 67 calculates the number of purchased pieces by, if a value of the first decimal place is "1", rounding off the value and, if the value of the first decimal place is "9", rounding up the value.

If the value of the first decimal place is "2" to "8", the number of purchased pieces is regarded as being unable to be calculated. Concerning this point, the integration processing unit 67 may calculate the number of purchased pieces by, if the value of the first decimal place is "1" or "2", rounding off the value and, if the value of the first decimal place is "8" or "9", rounding up the value. Alternatively, if the weight change amount cannot be divided by the unit weight, the number of purchased pieces may be regarded as being unable to be calculated. Usually, commodities are correctly displayed in the sections of the shelf 10. Therefore, since the weight change amount can be divided by the unit weight, the number of purchased pieces is not unable to be calculated.

The integration processing unit 67 outputs a purchase notification command to the purchase management device 7. The purchase notification command includes a member ID, a commodity code of commodity data, a commodity name and a unit price, and the number of purchased pieces. Accordingly, the integration processing unit 67 ends the purchase processing.

On the other hand, if the number M of consumers present in the purchase region 112 is two or more, the integration processing unit 67 acquires tracking position information of traffic line data corresponding to the present time from the tracking files 68 of the consumers. The integration processing unit 67 counts, based on tracking position information and action position information acquired from the tracking files 68, the number N of consumers capable of performing a purchasing action. Specifically, the integration processing unit 67 confirms, for each of the tracking files 68, whether an action of a consumer present in a place specified by the tracking position information stretching a hand and taking out a commodity from a place specified by the action position information is possible. The integration processing unit 67 counts, as the number N of consumers capable of performing a purchasing action, the number of the tracking files 68 for which it is determined that the action of taking out a commodity is possible.

The integration processing unit 67 confirms whether the number N of consumers capable of performing the purchasing action is zero. If the number N is zero, the integration processing unit 67 performs the same processing as the processing executed if the number M is zero.

If the number N of consumers capable of performing the purchasing action is one, the integration processing unit 67 specifies the consumer as a purchaser. The integration processing unit 67 executes the same processing as the processing executed if the number M is 1.

If the number N of consumers capable of performing the purchasing action is two or more, a purchaser cannot be specified. The integration processing unit 67 outputs sound data of a purchase error to the sound synthesizing unit 66. Consequently, the sound synthesizing unit 66 synthesizes sound data indicating the purchase error. Sound such as "Since a purchaser cannot be specified, an error occurs" is output from the speaker 5.

In this way, the integration processing unit 67 executes purchase processing on the purchasing action of the consumer to thereby specify one consumer present in the purchase region 112 as a purchaser of a commodity taken out from the shelf 10. The integration processing unit 67 transmits a purchase notification command including a member ID of the consumer specified as the purchaser and data of the purchased commodity to the sales management device 7.

The sales management device 7, which receives the purchase notification command, acquires the member ID from the purchase notification command. The sales management device 7 creates purchased commodity data based on the data of the commodity included in the purchase notification command, that is, the commodity code, the commodity name, the unit price, and the number of purchased pieces. The sales management device 7 adds the purchased commodity data to the purchase list 71 in which the acquired member ID is set.

In this way, every time the sales management device 7 receives the purchase notification command from the integration processing unit 67, the sales management device 7 adds the purchased commodity data to the purchase list 71 in which the member ID included in the purchase notification command has been set.

The operation of the integration processing unit 67 to which the exit notification command is input is explained. The integration processing unit 67 acquires the tracking ID from the exit notification command. The integration processing unit 67 searches through the correlation table 69 and confirms whether a member ID is correlated with the tracking ID. If a member ID is not correlated, a consumer managed by the tracking ID is a consumer exiting the store without performing personal authentication. Therefore, the integration processing unit 67 ends this processing.

If a member ID is correlated with the tracking ID, the integration processing unit 67 acquires the member ID correlated with the tracking ID. The integration processing unit 67 outputs a settlement permission notification command to the sales management device 7. The settlement permission notification command includes the member ID.

In this way, if the exit notification command is input to the integration processing unit 67, the integration processing unit 67 determines that a settlement instruction is given. The integration processing unit 67 outputs a settlement permission notification to the sales management device 7.

The sales management device 7, which receives the settlement permission notification command, acquires the member ID from the settlement permission notification command. The sales management device 7 selects the purchase list 71 in which the member ID has been set. The sales management device 7 requests the member server 8 to transmit information relating to settlement registered by a consumer identified by the member ID.

In response to the request, the member server 8 searches through the member database 81, acquires the information relating to settlement registered by the consumer, and respond to the purchase management device 7.

If receiving the response of the information relating to settlement from the member server 8, the sales management device 7 outputs the purchased commodity data registered in the purchase list 71 to the settlement server 9 together with the information relating to settlement and requests the settlement server 9 to execute settlement. In response to the request, the settlement server 9 executes settlement processing. For example, if the information relating to settlement is information relating to card settlement by a credit card, the settlement server 9 executes settlement processing by the credit card. For example, if the information relating to settlement is for electronic settlement performed using a barcode or a two-dimensional code, the settlement server 9 executes settlement processing by electronic settlement. The sales management device 7 ends the processing for the settlement permission notification command.

The operation of the store system 100 is as explained above.

As explained above, in the store system 100, the commodity monitoring sensors 1, the tracking sensors 21 and 22, and the action monitoring sensor 3 are provided in the shelf 10 for displaying commodities. The commodity monitoring sensors 1 function as the first sensor for detecting states of the commodities displayed on the shelf 10. The tracking sensors 21 and 22 and the action monitoring sensor 3 function as the second sensor for detecting a moving body moving in the monitoring region for the shelf 10. The monitoring region is the tracking region 111 including the purchase region 112. The moving body is a consumer. The store system 100 includes, in the shelf control device 6, the storing unit that stores the coordinate information representing the position of the shelf 10 and the range of the monitoring region, that is, the setting data file 610. The store system 100 configures, in the shelf control device 6, a specifying unit that identifies a commodity for which a state has change and a consumer corresponding to the state change of the commodity. This specifying unit of the control device identifies the commodity and the consumer according to detection results from the first sensor and the second sensor.

The coordinate information stored in the setting data file 610 is represented by a three-dimensional coordinate system having the left inner lower part of a rectangular parallelepiped circumscribing the shelf 10 set as the origin O, as depicted with FIG. 9. The three-dimensional coordinate system has the width direction, the depth direction, and the height direction of the shelf 10 set as the coordinate axes of the X axis, the Y axis, and the Z axis, respectively. That is, a lower corner of the shelf 10 is set as the position of the origin O. Since the coordinate information stored in the setting data file 610 is represented by a coordinate system having an origin and coordinate axes set based on the shelf 10 itself in this way, even if the layout position of the shelf 10 is changed within the store, shelf disposition information stored in the memory area 611 of the setting data file 610 does not need to be change. Moreover, by consistently adopting a three-dimensional coordinate system having the left inner lower corner of a rectangular parallelepiped conceptually formed to surround the shelf 10 set as the origin O and setting the coordinate X, Y, Z axes to respectively correspond to the width, depth, and height directions of the shelf 10, respectively, there is an advantage in that the coordinate system associated with each shelf 10 can be consistently identified.

For example, as illustrated in FIG. 10, a case is illustrated in which the position of the shelf 10 is changed from one wall to another wall. In particular, the shelf 10 is moved from facing towards a doorway R of a rectangular store floor Fa, to being set perpendicular to the doorway R. However, even if the shelf 10 position is changed in this way, the origin O and the coordinate axes for the shelf 10 remains unchanged, with respect to the shelf 10 itself. Therefore, it is unnecessary to change the disposition information stored in the memory area 611 of the setting data file 610 for the shelf 10.

As illustrated in FIGS. 1 and 2, the commodity monitoring sensors 1, the tracking sensors 21 and 22, and the action monitoring sensor 3 are provided integrally within the shelf 10. That is, the orientations of these various sensors are fixed relative to the shelf 10 itself. Accordingly, even if the facing direction of the shelf 10 is changed, since these sensors also move according to this change, the directions of the sensitivity center points and the sensitivity axes of the tracking sensors 21 and 22 and the action monitoring sensor 3 with do not change respect to the orientation of shelf 10 itself. Therefore, even if the layout position of the shelf 10 is changed within the store, it is unnecessary to change the disposition information stored in the memory areas 612 to 614 of the setting data file 610.

The tracking region 111, the purchase region 112, and the authentication regions 113 and 114 are set based on the position of the shelf 10. The intra-region coordinate group indicating the regions in the setting data file 610 is the aggregate of the coordinates of the three-dimensional coordinate system based on the shelf 10.

For example, in FIG. 10, both of the consumer SA (present in front of the shelf 10 before the change of the layout) and the consumer SB (present in front of the shelf 10 after the change of the layout) are standing at a position spaced from the left side surface of the shelf 10 in the width direction by a distance Xa and from the front surface of the shelf 10 in the depth direction by a distance Ya. In this case, tracking position information Pa for the consumer SA is represented by the coordinate (Xa, Ya). Likewise, tracking position information Pb for the consumer SB is also represented by the coordinate (Xa, Ya).

In this way, with the store system 100 in this embodiment, even if the layout position of the shelf 10 is changed, the disposition information and the region information stored in the setting data file 610 are not changed. Therefore, it is possible to easily perform a store layout change (e.g., rearrange pieces of display furniture on the store floor or the like).

In the store system 100, the tracking sensors 21 and 22 and the action monitoring sensor 3 are provided integrally with the shelf 10. The sensors are used for detecting a consumer moving in the monitoring region for the shelf 10. Therefore, labor and time for changing the attachment positions of the tracking sensors 21 and 22 and the action monitoring sensor 3 according to the layout change of the shelf 10 are also unnecessary.

In the store system 100, the personal authentication devices 41 and 42 are provided integrally with the shelf 10 as the sensors for detecting a member ID, which is an example of identification information for identifying a consumer. The intra-region coordinate group in the authentication region indicating the detection range of the personal authentication devices 41 and 42 is also stored in the setting data file 610 as the aggregate of the coordinates of the three-dimensional coordinate system based on the shelf 10. Therefore, labor and time for changing the attachment positions of the personal authentication devices 41 and 42 according to the layout change of the shelf 10 are also unnecessary.

In the store system 100, articles displayed on the shelf 10 are commodities. Therefore, it is possible to easily perform a layout change of the shelf 10 for displaying various commodities.

In the store system 100, a moving body moving in the monitoring region for the shelf 10 is a consumer. Therefore, it is possible to achieve an unmanned store by introducing the store system 100 in a convenience store, a small kiosk, and the like.

The article display system according to the embodiment is explained above. However, such an embodiment is not limited to the article display system.

In the embodiment, the three-dimensional coordinate system is set based on position of the lower left backside corner of the rectangular parallelepiped surrounding the shelf 10 being set as the origin O. The coordinate system based on the shelf 10 is not necessarily limited to one with an origin point for all three dimensions in the three-dimensional coordinate system set on a position of the shelf 10. In may be sufficient in some instances, for only an origin point of one coordinate axis to be set on a position of the shelf 10. Alternatively, any part of a structure moving integrally with the shelf 10 may be set as the origin O. In short, the coordinate system only has to be, for example, a coordinate system fixed to the display furniture itself, such that coordinate system moves when the shelf 10, is moved. If accounting for movements along the Z-axis direction is unnecessary, the coordinate system adopted may be a two-dimensional coordinate system.

The article display system is not limited to the store system 100. For example, the articles are not limited to the commodities for sale. For example, the article display system can also be applied to an article display system of a warehouse that stores articles such as manufactured products, packages, mail, and delivered products. The moving body is not limited to the person. For example, the moving body may be a self-propelled robot.

The personal authentication devices 41 and 42 do not always have to be provided in the shelf 10 in every example. The personal authentication devices 41 and 42 may be provided, for example, near the entrance of the store. However, in this case, it is necessary to change, according to the layout change of the shelf 10, the authentication region information stored in the setting data file 610. However, since the other disposition information and region information are not changed, labor and time involved in the layout change is still greatly improved from labor and time in the past.

The personal authentication processing unit 63 may authenticate the consumer with biometric authentication. In this case, the personal authentication devices 41 and 42 are devices that read biometric information from a face, an iris, or a fingerprint.

The commodity monitoring processing unit 64 may monitor movement of a commodity from an image photographed by a camera. In this case, it is possible to detect, according to similarity of the image of the commodity photographed by the camera and a preset image of the commodity, that the commodity has been returned to a wrong place.

The commodity monitoring sensor 1 may be a sensor that detect an increase or a decrease in the quantity of displayed commodities. In this case, if quantity data from the commodity monitoring sensor 1 decreases, the commodity monitoring processing unit 64 recognizes that a commodity has been taken from the section where the commodity monitoring sensor 1 is provided. If the quantity data from the commodity monitoring sensor 1 increases, the commodity monitoring processing unit 64 recognizes that a commodity has been placed in the section where the commodity monitoring sensor 1 is provided.

An image processing unit may be adopted instead of the sound synthesizing unit 66 to perform notification via an image display. Alternatively, the notification may be performed by using both of sound and an image. The notification may also be given to the user terminal TM carried by the consumer.

The shelf control device 6 is not limited to the configuration illustrated in FIG. 3. For example, a first computer device including the tracking processing unit 62, the personal authentication processing unit 63, the commodity monitoring processing unit 64, the action monitoring processing unit 65 and a second computer device including the integration processing unit 67 and the sound synthesizing unit 66 may be connected by a communication network to form the shelf control device 6. Alternatively, the first computer device may be further subdivided. The sound synthesizing unit 66 may be excluded from the second computer device.

While certain embodiments have been described, these embodiments have been presented by way of example only, and are not intended to limit the scope of the inventions. Indeed, the novel methods and systems embodiments described herein may be embodied in a variety of other forms; furthermore, various omissions, substitutions and changes in the form of the embodiments described herein may be made without departing from the scope of the inventions. The accompanying claims and their equivalents are intended to cover such forms or modifications as would fall within the scope of the inventions.

## Claims

1. An article display system, comprising:
a piece of display furniture on which articles can be displayed;
a first sensor configured to detect states of the articles displayed on the display furniture, the first sensor being fixed to the piece of display furniture;
a second sensor configured to detect a moving body within a monitoring region of the piece of display furniture, the second sensor being fixed to the piece display furniture;
a storage device configured to store coordinate information representing a position of the piece of display furniture and the monitoring region; and
a control device configured to identify, based on detection results from the first and second sensors, an article having a state that has changed and the moving body corresponding to the article with the state that has changed, wherein
the coordinate information is represented by a coordinate system having an origin set at a corner of the piece of display furniture.

2. The article display system according to claim 1, wherein the second sensor comprises a tracking sensor for tracking the moving body in the monitoring region.

3. The article display system according to claim 1 or 2, wherein the second sensor comprises an action monitoring sensor for monitoring actions of the moving body.

4. The article display system according to any one of claims 1 to 3, further comprising a third sensor for detecting identification information of the moving body, the third sensor being fixed to the piece of display furniture.

5. The article display system according to claim 4, wherein the storing unit stores coordinate information representing a detection region of the third sensor.

6. The article display system according to claim 4 or 5, wherein the third sensor is a barcode scanner.

7. The article display system according to any one of claims 1 to 6, wherein the article is a commodity for sale.

8. The article display system according to any one of claims 1 to 7, wherein the moving body is a consumer.

9. The article display system according to any one of claims 1 to 8, wherein the coordinate system is fixed to the piece of the display furniture.

10. The article display system according to any one of claims 1 to 9, wherein
the origin of the coordinate system is fixed to a point on the piece of the display furniture, and
each axis of the coordinate system is fixed relative to the piece of the display furniture.

11. The article display system according to any one of claims 1 to 10, wherein the piece of display furniture is a display shelf.

12. The article display system according to any one of claims 1 to 11, wherein the second sensor comprises a camera.

13. The article display system according to any one of claims 1 to 10, configured as a smart shelf of a retail store, wherein
the piece of display furniture is configured as a shelf structure holding a plurality of shelves;
the first sensor is configured to detect whether an item is removed from a shelf in the plurality of shelves, the first sensor having a sensing orientation fixed relative to the shelf structure;
the second sensor is configured to detect movement of a person within the monitoring region, the second sensor having a sensing orientation fixed relative to the shelf structure;
the storage device is configured to store coordinate information representing the monitoring region of the second sensor and a sensing region of the first sensor; and
the controller is configured to identify the item removed from the shelf changed and the person removing the item based on sensing results from the first and second sensors.

14. The article display system according to claim 13, wherein the origin of the coordinate system is fixed to a lowermost corner of the shelf structure and each axis of the coordinate system is fixed relative to the shelf structure.
